# EUROPEAN PATENT APPLICATION

(11) **EP 3 627 288 A1**
(43) Date of publication of application: **25.03.2020**
(21) Application number: 18213322.3
(22) Date of filing: 18.12.2018
(51) Int. Cl.: G06F 3/01, G06F 3/0481, G06T 19/00, G02B 27/01

(54) **CAMERA MODULE AND SYSTEM USING THE SAME**

(30) Priority: 20.09.2018 US 201816136257
(71) Applicant: XRSpace CO., LTD., Taoyuan City 330 (TW)
(72) Inventor: Chou, Peter, 100 Taipei City (TW); Lin, Chun-Wei, 330 Taoyuan City (TW); Hsieh, Yi-Kang, 310 Hsinchu County (TW); Wu, Chia-Wei, 231 New Taipei City (TW); Wang, Chuan-Chang, 116 Taipei City (TW)
(74) Representative: Straus, Alexander

(57) **Abstract**

A camera module (104), for a head-mounted display (102), abbreviated to HMD, includes a first optical module (C1) for tracking a hand motion of a user to generate a first tracking data; a second optical module (C2) for reconstructing a hand gesture, a step of the user and a physical space to generate a second tracking data; a third optical module (C3) for tracking three-dimensional, abbreviated to 3D, physical objects in the physical space to generate a third tracking data ; and a processing unit for integrating with the first tracking data, the second tracking data and the third tracking data to reconstruct a virtual space and 3D virtual objects based on the physical space and the 3D physical object and reconstruct a body behavior of the user.

## Description

### Field of the Invention

The present disclosure relates to a camera module and a system, and more particularly, to a camera module and a system capable of integrating multiple optical modules on a head-mounted display.

### Background of the Invention

With the advancement and development of technology, the demand of interactions between a computer game and a user is increased. Human-computer interaction technology, e.g. somatosensory games, virtual reality (VR) environment, augmented reality (AR) environment, mixed reality (MR) environment and extended reality (XR) environment, becomes popular because of its physiological and entertaining function. The conventional technology reconstructs virtual objects and virtualizes the user by tracking movements of the user with an outside-in tracking method, which traces a scene coordinates of moving objects in real-time, such as head-mounted displays (HMDs), motion controller peripherals or cameras. In this way, the HMDs, the motion controller peripherals or cameras may work together to react to gestures made by the user while in the VR/AR/MR/XR environment, so as to simultaneously provide interactions to the user in the VR/AR/MR/XR environment.

However, when the conventional technology works without the motion controller peripherals or cameras to track the motions or gestures of the user, the HMD cannot virtualize the gestures or movements of the user and affects the user experience.

### Summary of the Invention

Therefore, the present disclosure provides a camera module for a HMD and a system to provide a better usage experience.

This is achieved by a camera module according to the independent claim 1 or by a system according to the independent claim 6 here below. The dependent claims pertain to corresponding further developments and improvements.

As will be seen more clearly from the detailed description following below, the claimed camera module, for a head-mounted display (HMD), comprises a first optical module for tracking a hand motion of a user to generate a first tracking data; a second optical module for reconstructing a hand gesture, a step of the user, a physical space to generate a second tracking data; a third optical module for tracking three-dimensional, abbreviated to 3D, physical objects in the physical space to generate a third tracking data ; and a processing unit for integrating with the first tracking data, the second tracking data and the third tracking data to reconstruct a virtual space and 3D virtual objects based on the physical space and the 3D physical object and reconstruct a body behavior of the user.

In another aspect, the claimed system comprises a head-mounted display; and a camera module disposed on the head-mounted display, and the camera module comprises a first optical module for tracking a hand motion of a user to generate a first tracking data; a second optical module for reconstructing a hand gesture, a step of the user and a physical space to generate a second tracking data; a third optical module for tracking three-dimensional, abbreviated to 3D, physical objects in the physical space to generate a third tracking data; and a processing unit for integrating with the first tracking data, the second tracking data and the third tracking data to reconstruct a virtual space and 3D virtual objects based on the physical space and the 3D physical object and reconstruct a body behavior of the user.

These and other objectives of the present disclosure will no doubt become obvious to those of ordinary skill in the art after reading the following detailed description of the preferred embodiment that is illustrated in the various figures and drawings.

### Brief Description of the Drawings

FIG. 1 is a schematic diagram of a system according to an embodiment of the present disclosure.
FIG. 2 is a schematic diagram of a camera module according to an embodiment of the present disclosure.
FIGs. 3 and 4 are schematic diagrams of the system when applied on a user according to an embodiment of the present disclosure.

### Detailed Description

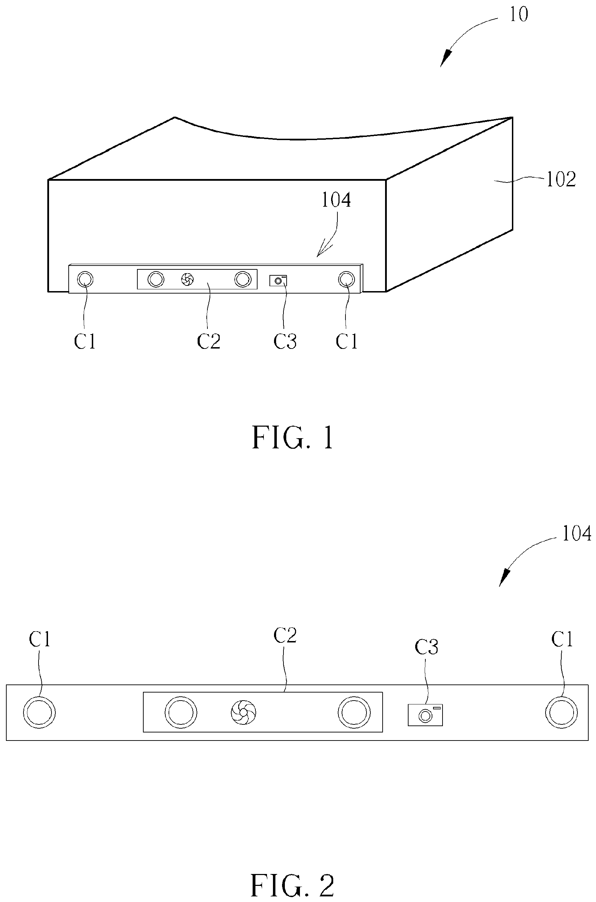

Please refer to FIG. 1, which is a schematic diagram of a system 10 according to an embodiment of the present disclosure. The system 10 includes a head-mounted display (HMD) 102 and a camera module 104. The HMD 102 may be worn by a user and configured to present VR/AR/MR/XR environment with at least one of virtual objects inside, in a display portion of the HMD 102. The camera module 104, as shown in FIG. 2, may be disposed or mounted on the HMD 102, which includes a first optical module C1 for tracking a hand motion of the user to generate a first tracking data, a second optical module C2 for tracking a hand gesture, a step of the user and a physical space to generate a second tracking data, a third optical module C3 for tracking three-dimensional (3D) physical objects in the physical space to generate a third tracking data , and a processing unit for integrating with the first tracking data, the second tracking data and the third tracking data to reconstruct a virtual space and 3D virtual objects based on the physical space and the 3D physical objects and reconstruct a body behavior of the user. In addition, the camera module 104 is rotatable on the HMD 102. For example, when the user wears the HMD 102 equipped with the camera module 104, the system 10 may reconstruct the 3D virtual space and the 3D virtual objects with an inside-out tracking method based on the hand gestures, the steps of the user, and the physical space captured by the camera module 104. Therefore, the system 10 of the present disclosure reconstructs the body behavior of the user and reconstructs the virtual objects in the VR/AR/MR/XR environment without implementing extra devices to reconstruct virtual objects and virtual spaces.

The examples mentioned above briefly explain that the system 10 of the present disclosure reconstructs the virtual space and the virtual objects without implementing extra devices. Notably, those skilled in the art may make proper modifications. For example, the optical modules included in the camera module 104 are not limited to those mentioned above, and over four optical modules integrated on the HMD may be adopted to implement the reconstruction of the virtual space and the 3D virtual objects, but not limited thereto, which belongs to the scope of the present disclosure.

In detail, the first optical module C1 may be a wide field-of-view (FOV) RGB camera for implementing a simultaneous localization and mapping (SLAM) and tracking the hand motion of the user such that the processing unit reconstructs or updates a map of an unknown environment while simultaneously keeping track of the user's location within it. In an embodiment, when the user's hand is moving, the FOV RGB camera tracks the hand motion with a wide FOV angle. Notably, the FOV angle of the FOV RGB camera is at least 100 degrees. Therefore, the system 10 of the present disclosure implements the SLAM and tracks the user's hand motion under the circumstance of being without trackers or the outside-in devices, e.g. the motion controllers and cameras to track or sense the movements of the users.

In order to track the physical space where the user stays, the hand gestures and the steps of the user, the second optical module C2 is utilized. In an embodiment, the second optical module C2 may be implemented by a RGB-Depth (RGB-D) camera. Therefore, the processing unit may utilize a tracking result of the RGB-D camera to reconstruct the 3D space the hand gestures or the steps of the user in accordance with a depth model or a depth algorithm. More specifically, when in the 3D physical space the RGB-D camera captures pictures with hand gestures and steps of the user with depth information, such that the processing unit recognizes the dynamic hand gestures and steps accordingly. Similarly, the 3D virtual space may be reconstructed based on the pictures took by the RGB-D camera. In other words, the RGB-D camera scans the space surrounding the user to build the 3D virtual space. Therefore, the tracking result of the second optical module C2 of the system 10 may be utilized for reconstructing the 3D virtual space, the hand gestures and the steps of the user by the processing unit, without the outside-in devices to sense and track the movements of the users.

The third optical module C3 may be a high-definition (HD) camera for taking pictures of the objects, so as to reconstruct the virtual objects in the 3D space. More specifically, the HD camera takes pictures of objects surrounding the user, such that the processing unit may establish the virtual objects in the 3D virtual space without the outside-in devices, and alternatively, the processing unit may integrate the pictures took by the HD camera with an object reconstruction algorithm to establish the virtual objects. Therefore, the system 10 may reconstruct the virtual objects in accordance with the third optical module C3 without the outside-in devices or other auxiliary devices.

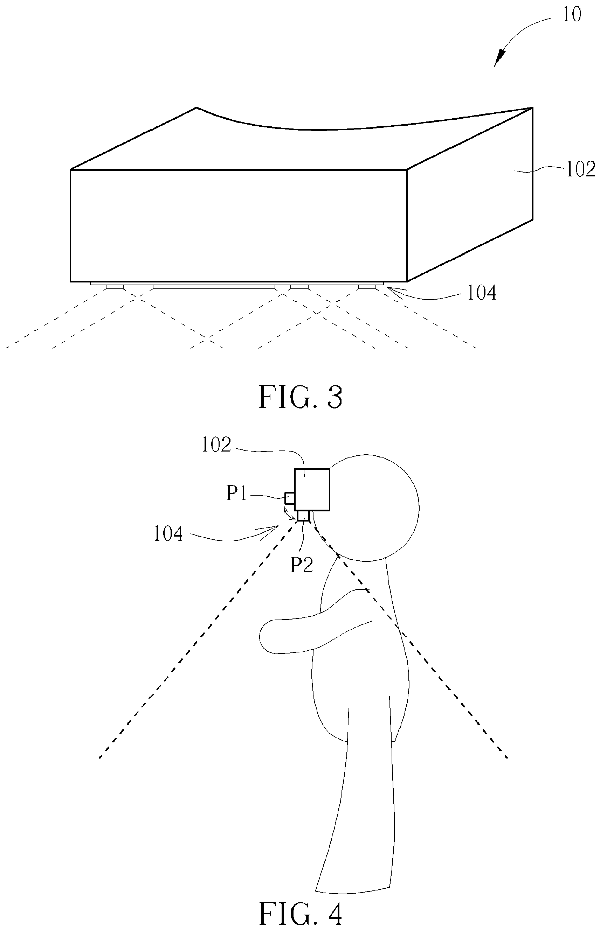

Notably, the embodiments stated above illustrate the concept of the present disclosure, those skilled in the art may make proper modifications accordingly, and not limited thereto. In an embodiment, please refer to FIGs. 3 and 4, which are schematic diagrams of the system 10 when applied on the user according to an embodiment of the present disclosure. As shown in FIGs. 3 and 4, dash lines represent ranges of each of the optical modules of the camera module 104, which covers the hands, foot and body of the user, such that the system 10 may reconstruct and virtualize the 3D virtual objects and space without the outside-in devices. Moreover, since the camera module 104 is rotatable when disposed on the HMD 102, the tracking range is maximized. As can be seen in FIG. 4, the camera module 104 may be rotated between a first position P1 and a second position P2. When the camera module 104 is at the first position P1, the tracking range is mainly in front of the user; when the camera module is at the second position P2, the tracking range is the body and the foot of the user. Notably, the camera module 104 may be adjusted and fixed at any position between the first position P1 and the second position P2, and not limited thereto. In another embodiment, the optical modules C1, C2 and C3 of the camera module 104 are individually rotatable in different dimensions, so as to maximize the tracking range and select a proper shooting angle.

In summary, the present disclosure provides a camera module and a system with an inside-out tracking method, so as to provide a better user experiences.

## Claims

1. A camera module (104), for a head-mounted display (102), abbreviated to HMD, **characterized by** comprising:
a first optical module (C1) for tracking a hand motion of a user to generate a first tracking data;
a second optical module (C2) for reconstructing a hand gesture, a step of the user and a physical space to generate a second tracking data;
a third optical module (C3) for tracking three-dimensional, abbreviated to 3D, physical objects in the physical space to generate a third tracking data ; and
a processing unit for integrating with the first tracking data, the second tracking data and the third tracking data to reconstruct a virtual space and 3D virtual objects based on the physical space and the 3D physical object and reconstruct a body behavior of the user.

2. The camera module (104) of claim 1, **characterized in that** the first optical module (C1), the second optical module (C2) and the third optical module (C3) are rotatable, and the first optical module (C1), the second optical module (C2) and the third optical module (C3) are rotatable unsynchronized.

3. The camera module (104) of claim 1, **characterized in that** the first optical module (C1) is a wide field-of-view, abbreviated to FOV, RGB camera for implementing a simultaneous localization and mapping, abbreviated to SLAM, and tracking the hand motion of the user.

4. The camera module (104) of claim 1, **characterized in that** the second optical module (C2) is a RGB-Depth, abbreviated to RGB-D, camera, and the processing unit reconstructs the hand gesture, the step of the user and a virtual space based on the second tracking data and a depth algorithm of the RGB-D camera.

5. The camera module (104) of claim 1, **characterized in that** the third optical module (C3) is a high-definition, abbreviated to HD, camera for taking a plurality of pictures and the processing unit reconstructs the 3D virtual object based on the third tracking data of the HD camera.

6. A system (10), **characterized by** comprising:
a head-mounted display (102); and
a camera module (104) disposed on the head-mounted display (102), and the camera module (104) comprises:
a first optical module (C1) for tracking a hand motion of a user to generate a first tracking data;
a second optical module (C2) for reconstructing a hand gesture, a step of the user and a physical space to generate a second tracking data;
a third optical module (C3) for tracking three-dimensional, abbreviated to 3D, physical objects in the physical space to generate a third tracking data; and
a processing unit for integrating with the first tracking data, the second tracking data and the third tracking data to reconstruct a virtual space and 3D virtual objects based on the physical space and the 3D physical object and reconstruct a body behavior of the user.

7. The system (10) of claim 6, **characterized in that** the first optical module (C1), the second optical module (C2) and the third optical module (C3) are rotatable, and the first optical module (C1), the second optical module (C2) and the third optical module (C3) are rotatable unsynchronized.

8. The system (10) of claim 6, **characterized in that** the first optical module (C1) is a wide field-of-view, abbreviated to FOV, RGB camera for implementing a simultaneous localization and mapping, abbreviated to SLAM, and tracking the hand motion of the user.

9. The system (10) of claim 6, **characterized in that** the second optical module (C2) is a RGB-Depth camera, and the processing unit reconstructs the hand gesture, the step of the user and a virtual space based on the second tracking data and a depth algorithm of the RGB-D camera.

10. The system (10) of claim 6, **characterized in that** the third optical module (C3) is a high-definition camera for taking a plurality of pictures and the processing unit reconstructs the 3D virtual object based on the third tracking data of the HD camera.
